(19) Europäisches Patentamt / European Patent Office / Office européen des brevets

(11) **EP 4 104 954 A1**

(12) **EUROPEAN PATENT APPLICATION**
published in accordance with Art. 153(4) EPC

(43) Date of publication:
**21.12.2022 Bulletin 2022/51**

(21) Application number: **21768637.7**

(22) Date of filing: **17.02.2021**

(51) International Patent Classification (IPC):
*B22F 7/08* (2006.01)     *C22C 32/00* (2006.01)
*C22C 1/05* (2006.01)     *B23K 26/21* (2014.01)
*B23K 26/34* (2014.01)     *B23K 26/342* (2014.01)
*B23K 35/30* (2006.01)     *B33Y 10/00* (2015.01)
*B33Y 80/00* (2015.01)     *B22F 3/105* (2006.01)
*B22F 3/16* (2006.01)

(52) Cooperative Patent Classification (CPC):
**B22F 3/105; B22F 3/16; B22F 7/08; B23K 26/21; B23K 26/34; B23K 26/342; B23K 35/30; B33Y 10/00; B33Y 80/00; C22C 1/05; C22C 32/00; Y02P 10/25**

(86) International application number:
**PCT/JP2021/006012**

(87) International publication number:
**WO 2021/182051 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.03.2020 JP 2020043355**

(71) Applicant: **KABUSHIKI KAISHA KOBE SEIKO SHO (KOBE STEEL, LTD.)**
**Hyogo 651-8585 (JP)**

(72) Inventor: **KUROSAWA, Eisuke**
**Kobe-shi, Hyogo 651-2271 (JP)**

(74) Representative: **Müller-Boré & Partner**
**Patentanwälte PartG mbB**
**Friedenheimer Brücke 21**
**80639 München (DE)**

(54) **METHOD FOR PRODUCING ADDITIVELY-MANUFACTURED ARTICLE, AND ADDITIVELY-MANUFACTURED ARTICLE**

(57)     This method for producing an additively-manufactured article comprises: a step for supplying, on a substrate, a powder material obtained by mixing a stellite alloy-containing first powder and a tungsten carbide-containing second powder; and a step for irradiating the supplied powder material with a weaving laser beam to laminate, on the substrate, at least a build-up layer obtained by melting and solidifying the powder material. The step for laminating the build-up layer is performed such that 20≤A≤35, 2.2≤B≤2.9, and 5 mass%≤R2≤15 mass% are satisfied, where A is a laser heat input index, B is a powder supply rate index, and R2 is the proportion of the second powder contained in the powder material.

*FIG. 2*

EP 4 104 954 A1

**Description**

TECHNICAL FIELD

The present invention relates to a method for producing an additively-manufactured object and an additively-manufactured object.

BACKGROUND ART

In general, in order to manufacture a component required to have wear resistance, a method is adopted in which cladding of a material having excellent wear resistance (high hardness) is performed on the surface by welding or thermal spraying, or the entire component is molded from a powdered material satisfying required properties by powder sintering (metallic molding + HIP or the like) or additive manufacturing. In addition, a method is also employed in which a powder sintered body is formed, and then the powder sintered body is joined to a surface of the component by diffusion joining, brazing, or the like.

Patent Literature 1 describes an invention relating to a novel material for additively manufacturing a high density built-up object containing ceramic by using depositing particles including a first powder containing ceramic and a second powder containing metal as a material used for powder additive manufacturing. In Patent Literature 1, the blending amount of the powder, average particles, and an integration method (sintering, binder bonding) of the depositing particles are specified. Specifically, it is presented that a built-up object having a high density, a high structure uniformity, and a high hardness can be obtained by building depositing particles including a tungsten carbide/chromium carbide powder as a ceramic powder and a cobalt/stellite alloy (Co alloy, "Stellite" is a registered trademark)/nickelchromium alloy/stainless steel powder as a metal powder by selective laser melting (SLM).

In addition, Non-Patent Literature 1 describes an example in which a surface coating technique of a composite material of a cobalt alloy (for example, Stellite No. 6) and tungsten carbide is applied by a laser powder spray melting method (laser metal deposition: LMD) in order to improve wear resistance of a surface of an agricultural machine. Non-Patent Literature 1 states that a cladding layer in which a large number of tungsten carbide powders are bonded in a form of being surrounded by a molten matrix portion (cobalt alloy) while maintaining an original particle state is produced, thereby enabling formation of a surface hardened layer having excellent wear resistance (high hardness).

CITATION LIST

PATENT LITERATURE

Patent Literature 1: JP-A-2017-114716

NON-PATENT LITERATURE

NON-PATENT LITERATURE 1: Wear resistance in the soil of Stellite-6/WC coatings produced using laser cladding method, Int. Journal of Refractory Metals and Hard Materials, Vol. 64, 2017, pp. 20-26.

SUMMARY OF INVENTION

TECHNICAL PROBLEM

However, in the case of Patent Literature 1, it is necessary to perform a large number of complicated steps (for example, an integration step using a binder or a spheroidization step) before the powder for additive manufacturing is prepared, which leads to an increase in material cost. In addition, an additive manufacturing example using an SLM method (selective laser melting method) is described as an example, but a case where additive manufacturing is selectively performed only on a part of a component formed of another material has not been described. Therefore, it is not clear whether a high-hardness layer having high uniformity and a large thickness can be partially imparted without cracks under the same condition as in Examples.

In addition, in the case of Non-Patent Literature 1, in order to increase the hardness of the entire cladding layer, it is necessary to increase the amount of tungsten carbide powder contained, and if the above measure is implemented by the LMD method, cracks may occur during the cladding. The thickness of the hardened cladding layer shown in the literature is about 1 mm, and in a case where cladding deposition is continued under the same condition, there is no guarantee that a stable high-hardness layer on the order of several millimeters can be obtained while avoiding the occurrence of cracks.

In addition, a material including a metal, a ceramic, or a cermet is used for a component that is required to have wear resistance. In the case of performing surface cladding, and molding and additive manufacturing of these materials, avoidance of cracks during processing is particularly an issue, in addition to ensuring the joining strength with the base metal and the cladding layer density. In order to increase the life of a target component, it is desirable to form a cladding layer having a hardness as high as possible and a thickness as large as possible (on the order of several millimeters). However, as the hardness and the thickness are increased, cracks are likely to occur during processing. Therefore, it is required to form the above-described cladding layer by a highly economical method without being subjected to dimensional restrictions of a portion to be processed.

Accordingly, an object of the present invention is to provide a method for manufacturing an additively-manufactured object, by which a cladding layer on the order of several millimeters in one pass can be formed efficiently and stably without causing cracks, and an additively-manufactured object.

SOLUTION TO PROBLEM

The present invention has the following configuration.

(1) A method for producing an additively-manufactured object, the method including:

a step of feeding a powdered material onto a base metal, the powdered material being obtained by mixing a first powder containing a stellite alloy and a second powder containing tungsten carbide; and
a step of irradiating the fed powdered material with a laser beam while weaving the laser beam, and depositing a cladding layer, obtained by melting and solidifying at least the powdered material, on the base metal, wherein the step of depositing the cladding layer satisfies the following conditional expressions [1], [2], and [3]:

$$20 \leq A \leq 35 \quad \text{Conditional Expression [1]};$$

$$2.2 \leq B \leq 2.9 \quad \text{Conditional Expression [2]};$$

and

$$5 \text{ mass\%} \leq R2 \leq 15 \text{ mass\%} \quad \text{Conditional Expression [3]},$$

where

$A = P \times \alpha/\beta$ [kJ/cm]: Laser heat input index,
$B = Q \times \alpha/\beta$ [g/cm]: Powder feeding rate index,
$P$ [W]: Heat input from laser beam,
$Q$ [g/min]: Feeding rate of powdered material,
$\alpha = W/V1$,
$\beta = V2 \times t$,
$W$ [cm]: Scanning width of beam spot caused by weaving operation,
$V1$ [cm/min]: Scanning speed of laser beam caused by weaving operation,
$V2$ [cm/min]: Advancing speed in welding direction,
$t$ [sec]: Time of one weaving cycle, and
$R2$ [mass%]: Ratio of second powder contained in powdered material.

(2) An additively-manufactured object, which is obtained by depositing a cladding material containing a stellite alloy and tungsten carbide on a base metal, the additively-manufactured object including

an intermediate layer formed, between the base metal and a cladding layer made of the cladding material, by dissolving a part of the base metal and a part of the cladding layer to each other,
wherein the cladding layer has a Vickers hardness of Hv 800 or more and Hv 980 or less, a tungsten content ratio of 16 mass% or more and 25 mass% or less, and a thickness of 3 mm or more and 5 mm or less.

ADVANTAGEOUS EFFECTS OF INVENTION

According to the present invention, a cladding layer having a thickness on the order of several millimeters in one pass can be stably formed without cracks.

BRIEF DESCRIPTION OF DRAWINGS

[FIG. 1] FIG. 1 is a schematic configuration diagram of a laser metal deposition apparatus for performing laser metal deposition.
[FIG. 2] FIG. 2 is an enlarged cross-sectional view of a main part of a welding head, which shows a state in which welding is performed while moving the welding head along a welding direction.
[FIG. 3] FIG. 3 is a schematic cross-sectional view of an additively-manufactured object in which a single-layer cladding layer made of a powdered material is formed on a base metal.
[FIG. 4] FIG. 4 is an illustration view schematically showing a state in which a cladding layer is formed by melting and solidifying a powdered material on a base metal while the welding head performs a weaving operation.
[FIG. 5] FIG. 5 is an illustration view showing conditions of the weaving operation shown in FIG. 4.
[FIG. 6] FIG. 6 is a graph showing measurement results of a cross-sectional hardness of the additively-manufactured object.
[FIG. 7] FIG. 7 is a cross-sectional photograph showing an example of a cladding layer formed on a base metal.
[FIG. 8] FIG. 8 is a graph showing a relation between a ratio of a second powder contained in the powdered material and a content ratio of tungsten in the cladding layer.

DESCRIPTION OF EMBODIMENTS

Hereinafter, an embodiment of the present invention is described in detail with reference to the drawings.
A method for producing an additively-manufactured object according to the present invention includes feeding a powdered material obtained by mixing a first powder containing a stellite alloy and a second powder containing tungsten carbide onto a base metal, and radiating a laser beam in a weaving manner to the fed powdered material to deposit a hardened cladding layer, obtained by melting and solidifying at least the powdered material, on the base metal.
As will be described in detail later, when the hardened cladding layer is deposited, a cladding layer having a thickness on the order of several millimeters in one pass can be stably formed without causing cracks. Here, one pass means one scanning path of the laser beam.
In the following description, an example in which a powdered material for forming a hardened cladding layer is melted using laser metal deposition (LMD) will be described, but the method for producing the present additively-manufactured object is not limited to this example. For example, the present invention can be preferably applied to laser additive manufacturing (LAM), direct metal laser welding (DMLS), or the like. In particular, since a workpiece is welded using a welding robot in the case of laser metal deposition, there is an advantage that the degree of freedom in a shape of an additively-manufactured object can be improved as compared with a case where a workpiece is processed in a chamber.

[Laser Metal Deposition Apparatus]

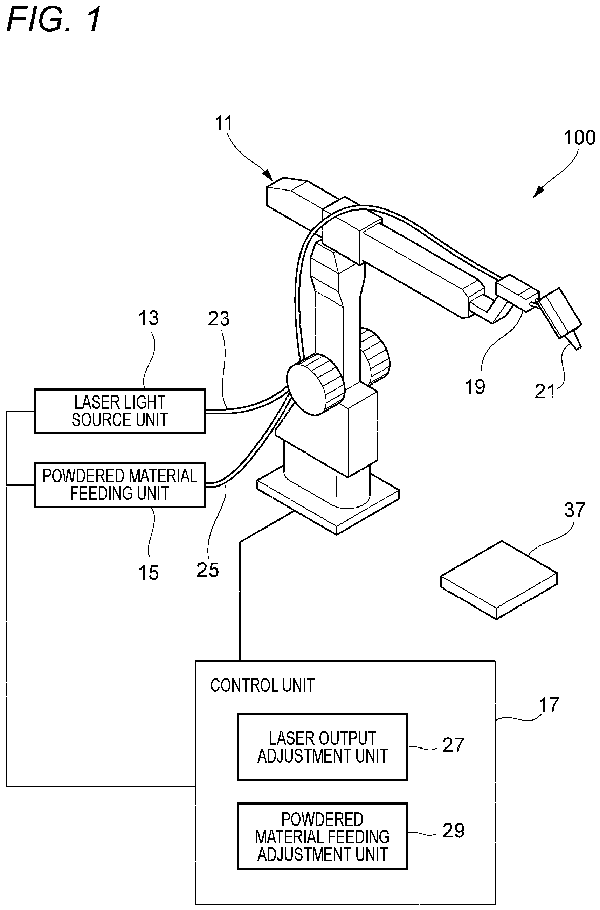

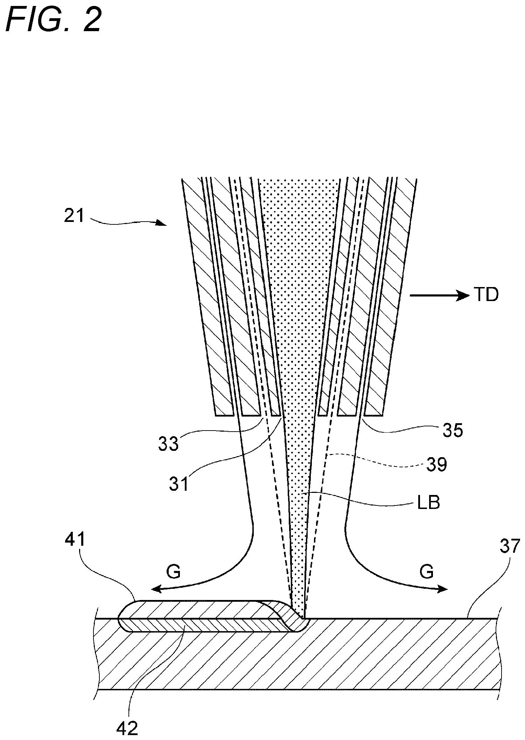

FIG. 1 is a schematic configuration diagram of a laser metal deposition apparatus 100 that performs laser metal deposition.
The laser metal deposition apparatus (hereinafter, referred to as LMD apparatus) 100 includes a welding robot 11, a laser light source unit 13, a powdered material feeding unit 15, and a control unit 17.
The welding robot 11 is an articulated robot having a distal end shaft on which a weaving drive unit 19 and a welding head 21 are provided. The position and posture of the welding head 21 may be freely set three-dimensionally within a range of the degree of freedom of a robot arm. The weaving drive unit 19 causes the welding head 21 to swing in a direction intersecting a welding line.
The laser light source unit 13 supplies a laser beam to the welding head 21 through an optical fiber 23. The powdered material feeding unit 15 feeds a powdered material 39 (see FIG. 2 to be described later) for forming a hardened cladding layer to be described later to the welding head 21 through a powder feeding pipe 25. The control unit 17 includes a laser output adjustment unit 27 that adjusts a laser output of the laser light source unit 13, and a powdered material feeding adjustment unit 29 that adjusts a feeding amount of the powdered material 39 fed by the powdered material feeding unit 15 to the welding head 21, and performs overall drive control of the units of the LMD apparatus 100.

The drive control performed by the control unit 17 is executed by a computer in accordance with a program. That is, the control unit 17 is a computer apparatus including a processor such as a CPU, a memory such as a read only memory (ROM) and a random access memory (RAM), and a storage device such as a hard disk drive (HDD) and a solid state drive (SSD). In this case, the function of each unit can be implemented by the processor executing a predetermined program stored in the memory or the storage device.

FIG. 2 is an enlarged cross-sectional view of a main part of the welding head 21, which shows a state in which welding is performed while moving the welding head 21 along a welding direction TD.

The welding head 21 is a head for laser welding using a $CO_2$ laser, a YAG laser, a fiber laser, a disk laser, or the like, and the type of the laser is appropriately selected depending on an additively-manufactured object or the like to be manufactured.

A distal end of the welding head 21 is provided with a laser radiation port 31, a powdered material feeding port 33, and a shielding gas feeding port 35.

The laser radiation port 31 is opened at a center of the distal end of the welding head 21, and a laser beam LB emitted from the laser emission port 31 is radiated to a base metal 37. The laser beam LB is oscillated by the laser light source unit 13 and guided to the welding head 21 through the optical fiber 23. The heat input toward the welded portion, which is generated by the laser beam LB, can be controlled to be any value by adjusting the intensity of the laser beam LB by the laser output adjustment unit 27.

The powdered material feeding port 33 is concentrically opened radially outward of the laser radiation port 31 at the distal end of the welding head 21, and the powdered material 39 fed from the powdered material feeding unit 15 is injected from the powdered material feeding port 33 toward the base metal 37. The feeding amount of the powdered material 39 to the base metal 37 can be controlled to be any value by the powdered material feeding unit 15.

In addition, the powdered material feeding unit 15 injects the powdered material 39 from the powdered material feeding port 33 together with a carrier gas from a carrier gas feeding unit (not shown). The powdered material 39 injected toward the base metal 37 is melted by the focused laser beam LB on a surface of the base metal 37, and then is cooled and solidified to form a cladding layer 41.

The shielding gas feeding port 35 is concentrically opened outside the powdered material feeding port 33 at the distal end of the welding head 21, and feeds a shielding gas G toward the base metal 37. The shielding gas G suppresses oxidation of the cladding layer 41 and a periphery thereof.

The configuration of the laser metal deposition apparatus 100 described above is an example, and the laser metal deposition apparatus 100 is not limited to this example.

[Powdered Material]

The powdered material feeding unit 15 mechanically mixes a first powder containing a Co-Cr alloy or a Co-Cr-W-C alloy steel (Stellite alloy) that is a Co-based alloy, and a second powder containing tungsten carbide to prepare a powdered material 39 for forming a cladding layer. The term "mechanically mixed" as used herein means stirring and mixing powdered materials with each other without a special treatment for different kinds of powders.

In addition, the mixing of the first powder and the second powder may be performed in the powdered material feeding unit 15, or may be performed at a position different from the powdered material feeding unit 15, such as a mixer (not shown) provided in the middle of a feeding path to the welding head 21.

As the first powder, for example, Stellite (No. 1, No. 6, No. 12, No. 21, etc., manufactured by Kennametal Stellite) may be used. Further, as the second powder, for example, a tungsten carbide powder (4670 manufactured by Hoganas) may be used. That is, the powdered material 39 is obtained by mechanically mixing commercially available powders, and a complicated pretreatment for a special cladding powdered material is not necessary. In the method for producing the additively-manufactured object, all the commercially available powdered materials are used as they are as the first powder and the second powder, so that the manufacturing method is excellent in economic efficiency.

The powdered material 39 used here contains tungsten carbide, which is the second powder, within a range of 5 mass% or more and 15 mass% or less relative to the entire powdered material 39. The lower limit of the content of the second powder is 5 mass%, preferably 6 mass%, and more preferably 7 mass%, and the upper limit thereof is 15 mass%, preferably 14 mass%, and more preferably 13 mass%. (It should be noted that a range that can be set by freely combining any numerical value of the plurality of lower limit values and any numerical value of the plurality of upper limit values can be said to be a preferable range.)

[Base Metal]

The base metal 37 has a flat plate shape, but is not limited to a flat plate shape. A base metal having an appropriate shape, such as a plate material having a curved surface, a block body, and a tubular body, can be adopted depending on a shape of the additively-manufactured object to be manufactured. As a material of the base metal 37, in addition to steel such as stainless steel, a cobalt-based or nickel-based alloy can be used, and various materials can be adopted depending on specifications of a product and the like.

[Formation of Hardened Cladding Layer (Additively-Manufactured Object)]

The LMD apparatus 100 shown in FIG. 1 performs laser metal deposition while causing the welding head 21 to perform a weaving operation by the weaving drive unit 19 and moving the welding head 21 in the welding direction TD by the robot arm. Accordingly, the cladding layer 41 that is formed by melting and solidifying the powdered material 39 is deposited with a predetermined thickness on the base metal 37.

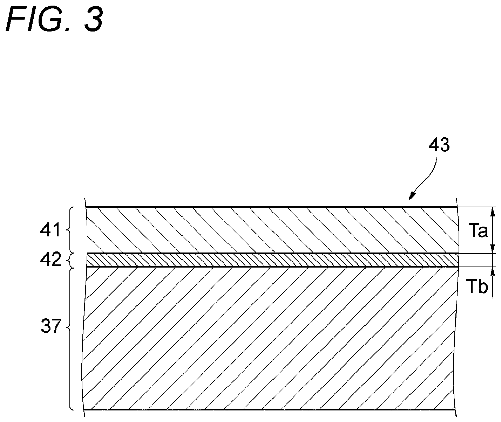

FIG. 3 is a schematic cross-sectional view of an additively-manufactured object 43 in which a single-layer cladding layer 41 made of the powdered material 39 is formed on the base metal 37.

The additively-manufactured object 43 includes the base metal 37, the cladding layer 41 made of a cladding material containing a stellite alloy and tungsten carbide, and an intermediate layer 42. The cladding material is melted, solidified, and deposited on the base metal 37 to form the cladding layer 41. The intermediate layer 42 is formed, between the base metal 37 and the cladding layer 41, by dissolving a part of the base metal 37 and a part of the cladding layer 41 to each other.

In the cladding layer 41, a thickness T1 of a layer (a layer formed by one pass) formed at one time by one welding is 3 mm or more, and preferably 4 mm or more, and is 5 mm or less, and preferably 4.5 mm or less. The Vickers hardness of the cladding layer 41 is Hv 800 or more and Hv 980 or less. A content ratio of tungsten in the cladding layer 41 is 16 mass% or more and 25 mass% or less. In order for the cladding layer 41 to reliably exceed the Vickers hardness Hv 800, the content ratio of tungsten in the cladding layer 41 is preferably 7 mass% or more and 15 mass% or less. The intermediate layer 42 means a penetration depth caused by a laser beam, and an average thickness T2 of the intermediate layer 42 preferably satisfies $0 < T2 \leq 0.5$ mm, and more preferably satisfies $0 < T2 \leq 0.25$ mm.

In the additively-manufactured object 43, the cladding layer 41 having a thickness of 3 mm or more and 5 mm or less per layer may be deposited over a plurality of layers. According to this, regarding an additively-manufactured object having a target shape, a built-up object having a large thickness can be formed by repeatedly depositing the cladding layer 41 in a plurality of passes even when the cladding layer 41 cannot be formed in one pass. Therefore, depositing with a high degree of freedom in design can be performed.

The Vickers hardness is an index corresponding to the content of the second powder (tungsten carbide) in the powdered material 39 used for forming the cladding layer 41. The lower limit value of the Vickers hardness corresponds to the lower limit value of the content of the second powder in a case where the content of the second powder in the powdered material 39 is small and the effect of increasing the hardness obtained by adding the second powder is small. In a case where the Vickers hardness is within the range of Hv 800 to Hv 980, the hardness of the cladding layer 41 is significantly raised, and in addition, cracks during cladding can be avoided, as compared with a case where the content of the second powder is less than the lower limit value. In a case where the Vickers hardness exceeds the upper limit of Hv 980, cracks are likely to occur during cladding.

When the content ratio of tungsten is within the above range, an appropriate Vickers hardness (Hv 800 to Hv 980) is easily obtained for the cladding layer 41.

When the average thickness T2 of the intermediate layer 42 exceeds 0.5 mm, the hardness of the cladding layer 41 is reduced due to the influence of dilution of the cladding layer 41 (an increase of the base metal component) caused by an increase in the penetration. In general, in a component or a member to be subjected to hard facing, a hardness of the base metal 37 is lower than the hardness of the cladding layer 41, and as the penetration in the base metal 37 is deeper, the cladding layer 41 is diluted by a melted component on the base metal 37 side, and the hardness decreases. Therefore, it is desirable that a thickness Tb of the intermediate layer 42 is as small as possible.

<Weaving Operation>

Next, a weaving operation for forming the cladding layer 41 will be described with reference to FIGS. 1 and 2 as appropriate.

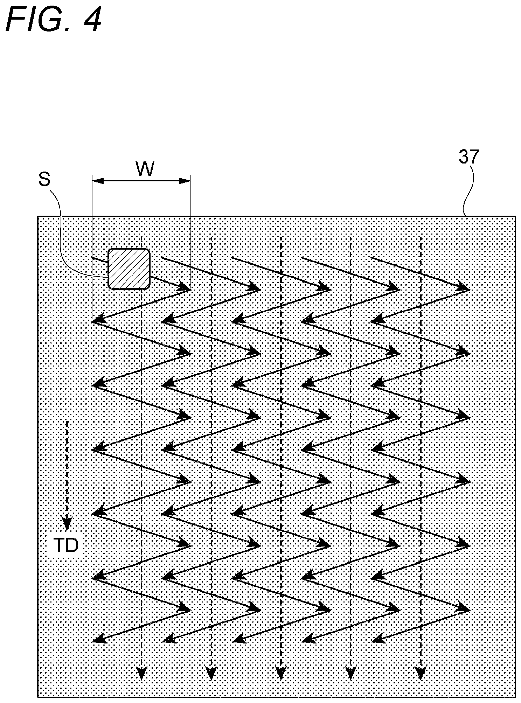

FIG. 4 is an illustration view schematically showing a state in which the cladding layer 41 is formed by melting and solidifying the powdered material 39 on the base metal 37 while the welding head 21 performs a weaving operation.

In order to form the cladding layer 41 made of the powdered material 39 on the surface of the base metal 37, the welding head 21 performs a weaving operation, and scanning is repeatedly performed with the laser beam LB emitted from the welding head 21. Specifically, the welding head 21 is swung by the weaving drive unit 19, and scanning is performed in a predetermined width shown in FIG. 4 with the laser beam LB radiated onto the base metal 37. Here, the predetermined width is a scanning width W of a beam spot S caused by the weaving operation.

Along with the weaving operation, the robot arm of the welding robot 11 is driven to advance the welding head 21 in the welding direction TD. By the scanning with the laser beam LB and the movement of the welding head 21 in the welding direction TD, a bead is formed wide on the surface of the base metal 37 by melting and solidifying the powdered material 39. Then, the next bead adjacent to the formed bead is formed so that a part of the scanning width W overlaps the existing bead. By repeating this operation, the cladding layer 41 composed of a plurality of rows of beads is deposited on the surface of the base metal 37 without gaps.

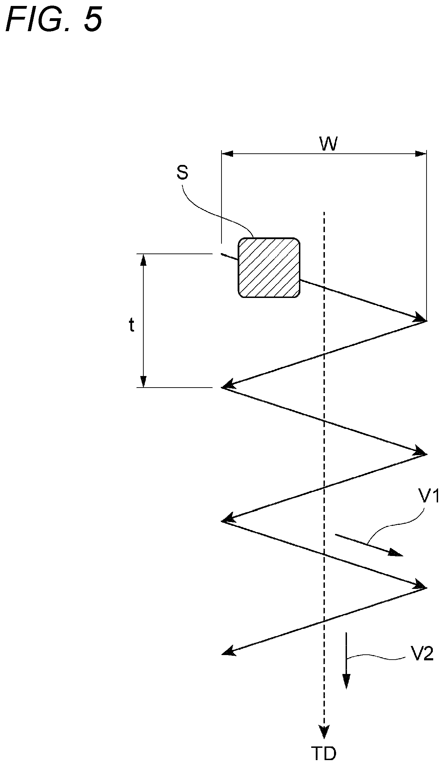

FIG. 5 is an illustration view schematically showing conditions of the weaving operation shown in FIG. 4.

The operation for depositing the cladding layer 41 includes an operation of weaving the laser beam LB with the scanning width W and an operation of advancing the welding head 21 in the welding direction TD. Here, a scanning speed of the welding head 21 in the weaving direction (scanning direction) is denoted by VI, an advancing speed (welding speed) of the welding head 21 in the welding direction TD is denoted by V2, and the time required for one cycle of the weaving operation is denoted by t.

In the step of depositing the cladding layer 41, the following conditional expressions [1], [2], and [3] are satisfied.

$$20 \leq A \leq 35 \qquad \text{Conditional Expression [1]}$$

$$2.2 \leq B \leq 2.9 \qquad \text{Conditional Expression [2]}$$

$$5 \text{ mass\%} \leq R2 \leq 15 \text{ mass\%} \qquad \text{Conditional Expression [3]}$$

Here, the parameters in the conditional expressions [1], [2], and [3] are as follows.

A = P × α/β [kJ/cm]: Laser heat input index
B = Q × α/β [g/cm]: Powder feeding rate index
P [W]: Heat input from laser beam
Q [g/min]: Feeding rate of powdered material
α = W/V1
β = V2 × t
W [cm]: Scanning width of beam spot caused by weaving operation
V1 [cm/min]: Scanning speed of laser beam caused by weaving operation
V2 [cm/min]: Advancing speed in welding direction
T [sec]: Time of one weaving cycle
R2 [mass%]: Ratio of second powder contained in powdered material

The conditional expression [1] shows an appropriate range of the laser heat input index A representing heat input by the laser beam LB with which the powdered material 39 on the base metal 37 is irradiated. The laser heat input index A means laser heat input per unit welding line during the weaving welding, and satisfies $20 \leq A \leq 35$, and preferably satisfies $20 \leq A \leq 30$.

In a case where the laser heat input index A is less than 20, occurrence of results of undissolved or unmelted powdered material due to insufficient laser heat input, or occurrence of cracks during cladding tends to be a problem. In the case of $20 \leq A \leq 35$ (where B also satisfies the conditional expression [2]), all of the following first, second, and third conditions are satisfied. First condition: The Vickers hardness of the cladding layer 41 described above is Hv 800 or more and Hv 980 or less. Second condition: The thickness Ta of the cladding layer 41 formed in one pass is 3 mm or more and 5 mm or less. Third condition: The thickness T2 of the intermediate layer 42 is 0 < T2 ≤ 0.5 mm.

In a case where the laser heat input index A exceeds 35, the penetration in the base metal 37 is large due to an excessive amount of laser heat input, the hardness of the cladding layer 41 in the first condition is less likely to reach Hv 800 or more, and the thickness of the cladding layer 41 in the third condition is less likely to reach 0.5 mm or less.

The conditional expression [2] shows an appropriate range of the powder feeding index B representing the feeding rate of the powdered material 39 to be fed onto the base metal 37. The powder feeding index B means a powder feeding weight per unit welding line during weaving welding, and satisfies $2.2 \leq B \leq 2.9$, preferably satisfies $2.4 \leq B \leq 2.7$, and more preferably satisfies $2.4 \leq B \leq 2.5$.

In a case where the powder feeding index B is less than 2.2, it is difficult to form the cladding layer 41 having a thickness of 3 mm or more due to insufficient powder feeding. In the case of $2.2 \leq B \leq 2.9$ (where A also satisfies the conditional expression [1]), all of the first, second, and third conditions described above are satisfied. In a case where the powder feeding index B exceeds 2.9, the possibility of occurrence of cracks during cladding increases due to the remaining of the unmelted powder caused by the excessive feeding of the powdered material, or the lack of laser heat input to the base metal (most of the laser heat input by laser is consumed for powder melting).

The conditional expression [3] shows an appropriate range of the ratio R2 of the second powder contained in the powdered material 39. The ratio R2 of the second powder is a mass ratio of the second powder to the total mass of the first powder and the second powder, and satisfies 5 mass% ≤ R2 ≤ 15 mass%, and preferably satisfies 7 mass% ≤ R2 ≤ 15 mass%.

In a case where the ratio R2 of the second powder is less than 5 mass%, the hardness of the cladding layer 41 described above hardly reaches Hv 800 or more. In addition, in the case of 5 mass% ≤ R2 ≤ 15 mass%, the hardness is significantly raised, and the occurrence of cracks during cladding can also be avoided, as compared with the case of less than 5 mass% described above. In a case where the ratio R2 exceeds 15 mass%, cracks are likely to occur during cladding.

<Weaving Radiation of Laser Beam>

Next, the weaving radiation action of the laser beam will be described.

In general, since a laser beam has high directivity and energy density, an inside of a region of a minute irradiation spot is intensively heated when the laser beam is radiated toward a base metal. Therefore, a keyhole is formed in the base metal depending on conditions, and heating is limited to a vicinity of the irradiation spot.

Therefore, when the laser beam LB is advanced in the welding direction, weaving is performed at a scanning speed higher than the advancing speed, so that a heating area is increased depending on the scanning range and the base metal in the scanning range is uniformly heated. The term "weaving" referred to here is a method for improving weldability by swinging a welding torch in a direction intersecting a welding line and uniformly melting both base metals in, for example, butt arc welding, but the weaving is applied to scanning with the laser beam LB in the present configuration.

In a case where welding is performed by applying weaving to the laser beam LB, the time during which a beam spot is radiated to the vicinity of a weld portion on the base metal 37 is longer than that in a case where welding is performed by moving the laser beam LB along a normal welding line (without weaving). That is, by applying weaving, the heat input in the vicinity of the weld portion can be increased, and heating for the base metal 37 can be promoted. Therefore, when the laser beam LB is radiated over a wide range toward the base metal to which the powdered material 39 is fed, a temperature difference between the cladding layer 41 formed by melting and solidifying the powdered material 39 due to heat input from the laser beam LB and the surface of the base metal 37 heated by the laser beam LB is reduced, and it is possible to prevent cracks of the cladding layer 41 due to shrinkage strain after cooling.

Since the heat input in the vicinity of the weld portion is increased due to weaving of the laser beam LB, the feeding amount of the powdered material 39 fed during the welding can be increased, and surfacing with a large thickness per pass can be performed. In this case, the surface of the base metal 37 is thickly covered with the powdered material 39, and heat input from the laser beam LB is consumed for melting the powdered material 39. Therefore, excessive heating for the base metal 37 performed by the laser beam LB is avoided, and the penetration amount is reduced. Accordingly, the cladding layer 41 can be easily formed in a thickness on the order of several millimeters in one layer, and when the cladding layer 41 has a thickness of about 3 mm to 5 mm, multilayer cladding over a plurality of times may be unnecessary. Therefore, the possibility of occurrence of cracks can be reduced as compared with the case where the surfacing is repeatedly performed. Further, the effects of relaxing the dimensional restriction, reducing the construction cost, and shortening the lead time can also be obtained.

As described above, by applying weaving to the laser beam LB and increasing the powder feeding amount at the same time, surfacing with a large thickness can be implemented without causing cracks while preventing excessive penetration in the base metal 37. In general, in the laser metal deposition, input energy generated by the laser beam LB is used for the melting of a fed powdered material and direct heating of a base metal. When the ranges of the above conditional expressions [1] to [3] described above are satisfied, most of the heat input from the laser beam LB is used for melting the powdered material 39, and excessive heating of the base metal 37 is prevented. The base metal 37 is also heated by the thermal energy of the melted powdered material 39 itself, so that the occurrence of cracks can also be reduced from this point. That is, in the above-described conditional expressions [1] to [3], the balance among the action of preventing excessive penetration in the base metal 37, the action of preventing the occurrence of cracks, and the action of setting the thickness of the cladding layer 41 to the order of several millimeters is appropriately adjusted.

For example, in a case where weaving is applied to the laser beam while the feeding amount of the powdered material is small, the laser beam is directly radiated to the base metal, and most of the input energy is consumed for heating the base metal. As a result, the amount of penetration in the base metal increases, and the cladding layer 41 is diluted, resulting in reduction in the hardness. In this case, the cracks of the cladding layer 41 can be avoided, but the cladding layer 41 remains thin, and cladding on the order of several millimeters cannot be performed.

A step of forming the cladding layer 41 by weaving of the laser beam LB is not limited to the step of moving the welding head 21 shown in FIG. 1 by the robot arm of the welding robot 11 while weaving the welding head 21. For example, the laser beam LB may be of a tandem beam type, and the roles of melting and cladding of the powdered material and heating of the base metal may be separately performed. In addition, for heating the base metal, a heating device that performs heating by burner heating, high-frequency conduction heating, or the like may be used in combination. In this case, the scanning range of weaving is reduced, the advancing speed in the welding direction is improved, and the tact time can be shortened.

[Examples]

The laser metal deposition apparatus shown in FIG. 1 was used to perform overlay welding on the base metal of steel (SS400). The size of the base metal is 50 mm in length $\times$ 50 mm in width $\times$ 20 mm in thickness. A Stellite No. 1 powder was used as the first powder, and a tungsten carbide powder was used as the second powder to form a single cladding layer on the entire surface of the base metal. Various conditions and results of the cladding formation are shown in Table 1.

[Table 1]

Table 1

| Case | Heat input index A [kJ/cm] | Powder feeding index B [g/cm] | Content ratio R2 of second powder [mass%] | Result | | | | |
|---|---|---|---|---|---|---|---|---|
| | | | | Weld crack | Vickers hardness Hv/300 gf | Thickness Ta of cladding layer[mm] | Thickness T2 of intermediate layer[mm] | Content ratio of W in cladding layer [mass% ] |
| Test Example 1-1 | 19.1 | 2.63 | 0.0 | B | Not measured | Not measured | Not measured | Not measured |
| Test Example 1-2 | 16.6 | 2.92 | 0.0 | B | 717.7 | 4.50 | 0.5 or less | Not measured |
| Test Example 1-3 | 22.4 | 2.63 | 0.0 | A | 716.3 | 5.00 | 0.25 or less | Not measured |
| Test Example 1-4 | 19.1 | 2.10 | 0.0 | B | Not measured | Not measured | Not measured | Not measured |
| Test Example 1-5 | 22.1 | 2.54 | 0.0 | A | 720.6 | 5.75 | 0.5 or less | 12.02 |
| Test Example 2 | 22.1 | 2.50 | 4.4 | A | 742.2 | 5.25 | 0.5 or less | 15.18 |
| Test Example 3 | 22.1 | 2.48 | 7.0 | A | 808.2 | 5.00 | 0.25 or less | 18.5 |
| Test Example 4 | 22.1 | 2.47 | 9.7 | A | 938.5 | 5.00 | 0.5 or less | 20.5 |
| Test Example 5 | 22.1 | 2.50 | 14.7 | A | 953.3 | 5.00 | 0.25 or less | 24.18 |

(continued)

| Case | Heat input index A [kJ/cm] | Powder feeding index B [g/cm] | Content ratio R2 of second powder [mass%] | Result | | | | |
|---|---|---|---|---|---|---|---|---|
| | | | | Weld crack | Vickers hardness Hv/300 gf | Thickness Ta of cladding layer[mm] | Thickness T2 of intermediate layer[mm] | Content ratio of W in cladding layer [mass% ] |
| Test Example 6 | 22.1 | 2.48 | 20.1 | B | 989.2 | 5.25 | 0.25 or less | 29.15 |
| Test Example 7 | 43.5 | 2.50 | 15.0 | A | 650.9 | 6.75 | 0.25 or less | Not measured |
| Test Example 8 | 28.2 | 2.44 | 14.7 | A | 854.1 | 4.50 | 0.25 or less | 24.07 |
| Test Example 9 | 37.7 | 2.50 | 15.0 | A | 652.2 | 5.00 | 0.25 or less | Not measured |
| Test Example 10 | 21.8 | 2.00 | 15.0 | A | 773.7 | 3.75 | 0.5 or less | Not measured |
| Test Example 11 | 21.8 | 1.75 | 15.0 | A | 709.9 | 3.50 | 0.25 or less | Not measured |

In Test Examples 1-1 to 1-5, only the first powder was used as a powdered material and the second powder (tungsten carbide powder) was not contained, and the laser heat input index A and the powder feeding index B were changed.

In Test Examples 2 to 6, the laser heat input indexes A were set to the same condition as that of Test Example 1-5, and the powder feeding index B and the content of the second powder were changed.

In Test Examples 7 to 9, the laser heat input indexes A were larger than those of Test Examples 1-1 to 1-5 and Test Examples 2 to 6, 10, and 11. In Test Examples 10 and 11, the powder feeding indexes B were smaller than those of Test Examples 1-1 to 1-5 and Test Examples 2 to 9.

For Test Examples, the presence or absence of weld cracks in the cladding layer was checked by penetrant testing (PT), and the case of no weld cracks was evaluated as "A", and the case of presence of a weld crack was evaluated as "B".

In addition, the thicknesses of the cladding layer and the intermediate layer and the distribution of the Vickers hardness of the cladding layer were measured by cutting an additively-manufactured object after the cladding layer was formed on the base metal, observing a cross section, and using a micro Vickers hardness meter (test position: 0.25 mm pitch from a surface layer, test load: 300 gf).

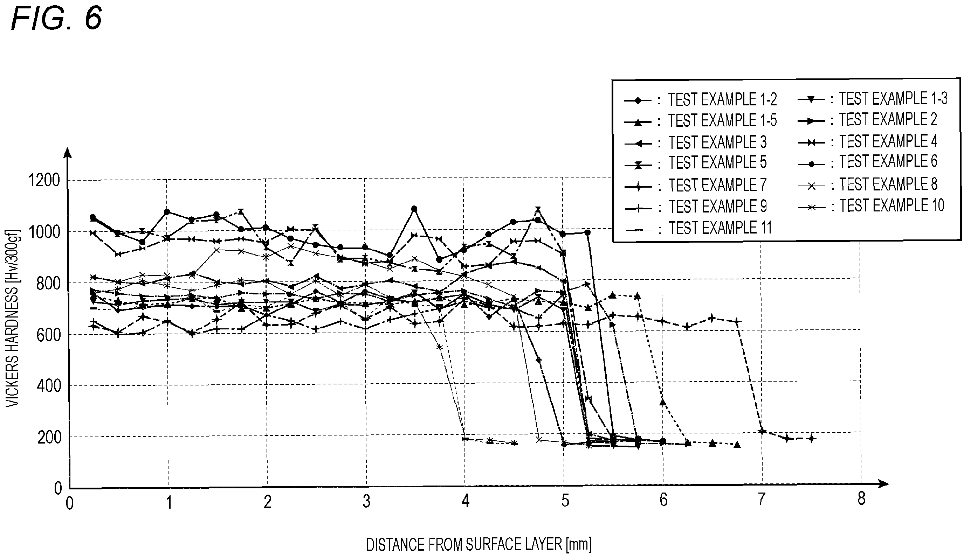

FIG. 6 is a graph showing measurement results of a cross-sectional hardness of the additively-manufactured object. In FIG. 6, unmeasured test examples (Test Examples 1-1 and 1-4) are omitted. As the Vickers hardness of the cladding layer, an average value of measurement values in a region with a hardness of Hv 600 or more corresponding to the cladding layer was used.

A component analysis of the cladding layer of the produced additively-manufactured object was performed by X-ray fluorescence (XRF). An X-ray radiation range was φ10 mm, six elements of Co, Cr, W, Fe, Ni, and Mo were analyzed, and a fundamental parameter (FP) method was adopted for the quantitative calculation.

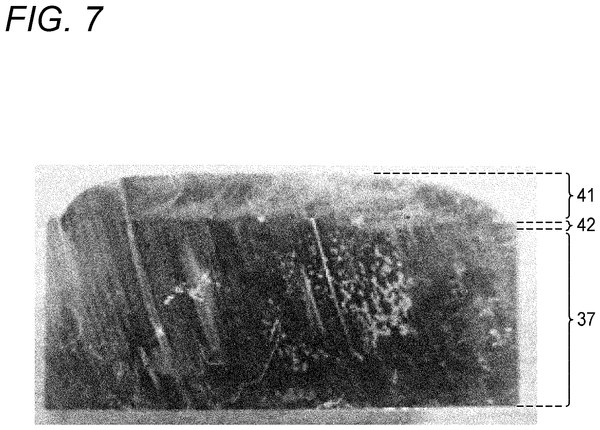

FIG. 7 is a graph showing a relation between the ratio R2 of the second powder contained in the powdered material and a content ratio R1 of tungsten contained in the cladding layer. It can be found that the content ratio R1 of tungsten increases in proportion to an increase in the addition amount of the second powder.

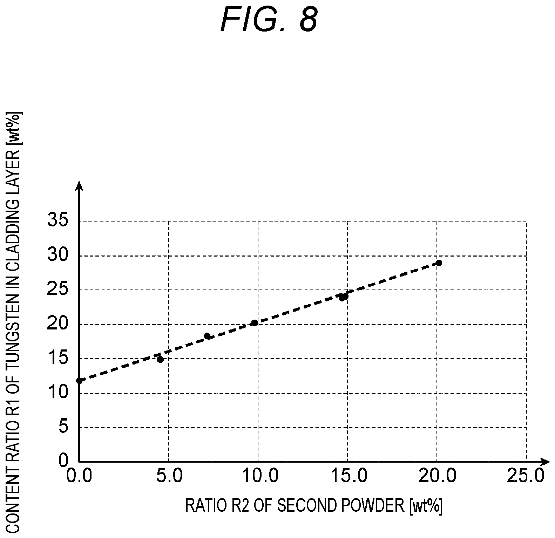

FIG. 8 is a cross-sectional photograph showing an example of a cladding layer formed on a base metal. A second layer, which is an intermediate layer, is formed between a first layer as a base metal and a third layer as a cladding layer.

When the formation and measurement of the cladding layer were performed under the above conditions, the results shown in Table 1 were obtained.

In Test Examples 1-1 to 1-5 in which tungsten carbide was not added to the powdered material, cracks occurred in Test Examples 1-1, 1-2, and 1-4, and the Vickers hardness did not reach Hv 800 with Test Examples 1-1 and 1-4 were excluded. In Test Example 1-5, the content ratio of tungsten in the cladding layer was less than 16 mass%.

In Test Example 2, a value of the laser heat input index A was set to be within the range of the conditional expression [1], and a value of the powder feeding index B was set to be within the range of the conditional expression [2], but a content of the second powder in the powdered material was set to be less than 5 mass%. In this case, cracks did not occur, but the Vickers hardness was less than Hv 800, and the content ratio of tungsten in the cladding layer was less than 16 mass%.

In Test Examples 3 to 5, values of the laser heat input index A were set to be within the range of the conditional expression [1], values of the powder feeding index B were set to be within the range of the conditional expression [2], and contents of the second powder in the powdered material were set to be 5 mass% or more and 15 mass% or less. As a result, cracks did not occur, all the conditions of Vickers hardness of Hv 800 or more and Hv 980 or less, a cladding layer thickness of 3 mm or more, and an intermediate layer thickness of 0.5 mm or less were satisfied, and a content ratio of tungsten in the cladding layer was also within the range of 16 mass% or more and 25 mass% or less.

In Test Example 6, a value of the laser heat input index A was set to be within the range of the conditional expression [1], and a value of the powder feeding index B was set to be within the range of the conditional expression [2], but a content of the second powder in the powdered material was set to be a value exceeding 15 mass%. In this case, cracking occurred, the Vickers hardness exceeded Hv 980, and a content ratio of tungsten in the cladding layer exceeded 25 mass%.

In Test Example 7, a value of the powder feeding index B was set within the range of the conditional expression [2], and a mass ratio of the second powder in the powdered material was set to 5 mass% or more and 15 mass% or less, but the laser heat input index A was set to be a value exceeding the range of the conditional expression [1]. As a result, cracks did not occur, but the Vickers hardness was less than Hv 800.

In Test Example 8, a value of the laser heat input index A was increased to 28.2[kJ/cm] close to the upper limit of the conditional expression [1]. In addition, the powder feeding index B was set within the range of the conditional expression [2], and a mass ratio of the second powder in the powdered material was set to 5 mass% or more and 15 mass% or less. In this case, cracks did not occur, all of the conditions of the Vickers hardness of Hv 800 or more and 980 or less, the cladding layer thickness of 3 mm or more, and the intermediate layer thickness of 0.5 mm or less were satisfied, and the content ratio of tungsten in the cladding layer was also within the range of 16 mass% or more and 25 mass% or less.

In Test Example 9, a value of the laser heat input index A was set to be 37.7[kJ/cm] exceeding the upper limit of the conditional expression [1], a value of the powder feeding index B was set to be within the range of the conditional expression [2], and a mass ratio of the second powder in the powdered material was set to 5 mass% or more and 15 mass% or less. In this case, cracks did not occur, but the Vickers hardness was less than Hv 800.

In Test Examples 10 and 11, values of the laser heat input index A were set to be within the range of the conditional expression [1], and mass ratios of the second powder in the powdered material were set to be 5 mass% or more and 15 mass% or less, but a value of the powder feeding index B was set to be less than the lower limit value of the conditional expression [2]. As a result, cracks did not occur, but the Vickers hardness was less than Hv 800.

The results of the pass/fail determination described above are collectively shown in Table 2. Regarding the Vickers hardness, a Vickers hardness of Hv 800 or more and Hv 980 or less was evaluated as "A", and a Vickers hardness out of the above range was evaluated as "B". Regarding the thickness of the cladding layer, a thickness of 3 mm or more and 5 mm or less was evaluated as "A", a thickness that was less than 3 mm or more than 5 mm was evaluated as "B". Regarding the thickness of the intermediate layer, a thickness of 0.5 mm or less was evaluated as "A", and a thickness that exceeded 0.5 mm was evaluated as "B".

[Table 2]

# EP 4 104 954 A1

Table 2

| Case | Determination | | | |
|---|---|---|---|---|
| | Weld crack | Hardness (Hv 800 $\leq$ Hv $\leq$ Hv 980) | Thickness of cladding layer (3 mm $\leq$ Ta $\leq$ 5 mm) | Thickness of intermediate layer (0 < T2 <0.5 mm) |
| Test Example 1-1 | B | - | - | - |
| Test Example 1-2 | B | B | A | A |
| Test Example 1-3 | A | B | A | A |
| Test Example 1-4 | B | - | - | - |
| Test Example 1-5 | A | B | A | A |
| Test Example 2 | A | B | A | A |
| Test Example 3 | A | A | A | A |
| Test Example 4 | A | A | A | A |
| Test Example 5 | A | A | A | A |
| Test Example 6 | B | B | A | A |
| Test Example 7 | A | B | A | A |
| Test Example 8 | A | A | A | A |
| Test Example 9 | A | B | A | A |
| Test Example 10 | A | B | A | A |
| Test Example 11 | A | B | A | A |

As in Test Examples 3, 4, 5, and 8, by setting the laser heat input index A, the powder feeding index B, and the ratio R2 of the second powder to a condition satisfying the above-described conditional expressions [1] to[3], an additively-manufactured object having a Vickers hardness of Hv 800 or more and Hv 980 or less (first condition), a cladding layer thickness in one pass of 3 mm or more and 5 mm or less (second condition), and a thickness of the intermediate layer of 0.5 mm or less (third condition) was obtained without causing cracks. In this case, the cladding layer had a tungsten content ratio of 16 mass% or more and 25 mass% or less, and a cladding layer having good wear resistance could be formed with a high efficiency.

The present invention is not limited to the above embodiments, and combinations of the respective configurations of the embodiments, or changes and applications made by those skilled in the art based on the description of the specification and the well-known technology are also intended by the present invention and are included within the scope to be protected.

As described above, the present specification discloses the following matters.

(1) A method for producing an additively-manufactured object, the method including:

a step of feeding a powdered material onto a base metal, the powdered material being obtained by mixing a first powder containing a stellite alloy and a second powder containing tungsten carbide; and

a step of irradiating the fed powdered material with a laser beam while weaving the laser beam, and depositing a cladding layer, obtained by melting and solidifying at least the powdered material, on the base metal, wherein the step of depositing the cladding layer satisfies the following conditional expressions [1], [2], and [3]:

$$20 \leq A \leq 35 \quad \text{Conditional Expression [1];}$$

$$2.2 \leq B \leq 2.9 \quad \text{Conditional Expression [2];}$$

and

$$5 \text{ mass\%} \leq R2 \leq 15 \text{ mass\%} \quad \text{Conditional Expression [3],}$$

where

$A = P \times \alpha/\beta$ [kJ/cm]: Laser heat input index,
$B = Q \times \alpha/\beta$ [g/cm]: Powder feeding rate index,
P [W]: Heat input from laser beam,
Q [g/min]: Feeding rate of powdered material,
$\alpha = W/V1$,
$\beta = V2 \times t$,
W [cm]: Scanning width of beam spot caused by weaving operation,
V1 [cm/min]: Scanning speed of laser beam caused by weaving operation,
V2 [cm/min]: Advancing speed in welding direction,
t [sec]: Time of one weaving cycle, and
R2 [mass%]: Ratio of second powder contained in powdered material.

According to the method for producing the additively-manufactured object, the heat input in the vicinity of the weld portion of the base metal can be increased by weaving of the laser beam, and the heating of the base metal can be promoted. Therefore, the temperature difference between the cladding layer formed by melting and solidifying the powdered material due to the heat input from the laser beam and the surface of the base metal heated by the laser beam is reduced, and the cracks of the cladding layer due to the shrinkage strain after cooling can be prevented.

Since the heat input in the vicinity of the weld portion is increased due to weaving of the laser beam, the feeding amount of the powdered material fed during the welding can be increased, and surfacing with a large thickness per pass can be performed.

Then, in a state in which the penetration (the formation range of the intermediate layer having an intermediate hardness between the base metal and the cladding layer) is small, a cladding layer on the order of several millimeters per cladding layer can be formed. As a result, it is not necessary to perform multilayer welding in order to ensure the thickness of a cladding layer as in the related art, and the possibility of occurrence of cracks during processing can be reduced. Further, the effects of relaxing the dimensional restriction, reducing the construction cost, and shortening the lead time can also be obtained.

In addition, a powdered material obtained by mixing generally commercially available powders such as a stellite alloy and tungsten carbide is used, so that it is not necessary to use a powdered material for cladding, which requires a complicated pretreatment, and it is possible to form a cladding layer that is excellent in the economic efficiency and has a high hardness as compared with a case where only a stellite alloy is used.

(2) The method for producing an additively-manufactured object according to (1), wherein the cladding layer is formed to have a Vickers hardness of Hv 800 or more and Hv 980 or less, a tungsten content ratio of 16 mass% or more and 25 mass% or less, and a thickness per pass of 3 mm or more and 5 mm or less.

According to the method for producing an additively-manufactured object, a cladding layer excellent in wear resistance and resistant to cracks can be formed with a thickness of 3 mm or more and 5 mm or less in one pass.

(3) The method for producing an additively-manufactured object according to (1) or (2), wherein an intermediate layer obtained by melting and solidifying the base metal and the powdered material is formed between the base metal and the cladding layer, and the intermediate layer has a thickness T2 satisfying $0 < T2 \leq 0.5$ mm.

According to the method for producing an additively-manufactured object, a cladding layer having a high hardness can be formed while preventing penetration into the base metal.

(4) The method for producing an additively-manufactured object according to any one of (1) to (3), wherein the cladding layer having a thickness of 3 mm or more and 5 mm or less per layer is deposited over a plurality of times.

According to the method for producing an additively-manufactured object, the object can be manufactured into any target shape, and the degree of freedom in design is improved.

(5) An additively-manufactured object, which is obtained by depositing a cladding material containing a stellite alloy and tungsten carbide on a base metal, the additively-manufactured object including

an intermediate layer formed, between the base metal and a cladding layer made of the cladding material, by dissolving a part of the base metal and a part of the cladding layer to each other,
wherein the cladding layer has a Vickers hardness of Hv 800 or more and Hv 980 or less, a tungsten content ratio of 16 mass% or more and 25 mass% or less, and a thickness of 3 mm or more and 5 mm or less.

According to the additive manufactured object, the cladding layer having a thickness of 3 mm or more and 5 mm or less, which has a high hardness and excellent wear resistance, is provided, so that a component having improved mechanical strength can be provided.

(6) The additively-manufactured object according to [5], wherein an average thickness T2 of the intermediate layer satisfies $0 < T2 \leq 0.5$ mm.

According to the additively-manufactured object, the bonding strength between the base metal and the cladding layer can be improved.

(7) The additively-manufactured object according to [5] or [6], wherein the cladding layer having a thickness of 3 mm or more and 5 mm or less per layer is deposited over a plurality of layers.

According to the additively-manufactured object, the object can be manufactured into any target shape, and the degree of freedom in design is improved.

The present application is based a Japanese patent application (No. 2020-43355) filed on March 12, 2020, contents of which are incorporated by reference in the present application.

REFERENCE SIGNS LIST

11 Welding robot
13 Laser light source unit
15 Powdered material feeding unit
17 Control unit
19 Weaving drive unit
21 Welding head
23 Optical fiber
25 Powder feeding pipe
27 Laser output adjustment unit
29 Powdered material feeding adjustment unit
31 Laser radiation port
33 Powdered material feeding port
35 Shielding gas feeding port
37 Base Metal
39 Powdered material
41 Cladding layer
43 Additively-manufactured object
100 Laser metal deposition apparatus

**Claims**

1. A method for producing an additively-manufactured object, the method comprising:

a step of feeding a powdered material onto a base metal, the powdered material being obtained by mixing a first powder containing a stellite alloy and a second powder containing tungsten carbide; and
a step of irradiating the fed powdered material with a laser beam while weaving the laser beam, and depositing a cladding layer, obtained by melting and solidifying at least the powdered material, on the base metal, wherein the step of depositing the cladding layer satisfies the following conditional expressions [1], [2], and [3]:

$$20 \leq A \leq 35 \quad \text{Conditional Expression [1]};$$

$$2.2 \leq B \leq 2.9 \quad \text{Conditional Expression [2]};$$

and

$$5 \text{ mass}\% \leq R2 \leq 15 \text{ mass}\% \quad \text{Conditional Expression [3]},$$

where

A = P × $\alpha/\beta$ [kJ/cm]: Laser heat input index,
B = Q × $\alpha/\beta$ [g/cm]: Powder feeding rate index,
P [W]: Heat input from laser beam,
Q [g/min]: Feeding rate of powdered material,
$\alpha$=W/V1,
$\beta$ = V2 × t,
W [cm]: Scanning width of beam spot caused by weaving operation,
V1 [cm/min]: Scanning speed of laser beam caused by weaving operation,
V2 [cm/min]: Advancing speed in welding direction,
t [sec]: Time of one weaving cycle, and
R2 [mass%]: Ratio of second powder contained in powdered material.

2. The method for producing an additively-manufactured object according to claim 1,
wherein the cladding layer is formed to have a Vickers hardness of Hv 800 or more and Hv 980 or less, a tungsten content ratio of 16 mass% or more and 25 mass% or less, and a thickness per pass of 3 mm or more and 5 mm or less.

3. The method for producing an additively-manufactured object according to claim 1,
wherein an intermediate layer obtained by melting and solidifying the base metal and the powdered material is formed between the base metal and the cladding layer, and the intermediate layer has a thickness T2 satisfying 0 < T2 ≤ 0.5 mm.

4. The method for producing an additively-manufactured object according to claim 2,
wherein an intermediate layer obtained by melting and solidifying the base metal and the powdered material is formed between the base metal and the cladding layer, and the intermediate layer has a thickness T2 satisfying 0 < T2 ≤ 0.5 mm.

5. The method for producing an additively-manufactured object according to any one of claims 1 to 4,
wherein the cladding layer having a thickness of 3 mm or more and 5 mm or less per layer is deposited over a plurality of times.

6. An additively-manufactured object, which is obtained by depositing a cladding material containing a stellite alloy and tungsten carbide on a base metal, the additively-manufactured object comprising

an intermediate layer formed, between the base metal and a cladding layer made of the cladding material, by dissolving a part of the base metal and a part of the cladding layer to each other,
wherein the cladding layer has a Vickers hardness of Hv 800 or more and Hv 980 or less, a tungsten content ratio of 16 mass% or more and 25 mass% or less, and a thickness of 3 mm or more and 5 mm or less.

7. The additively-manufactured object according to claim 6,
wherein an average thickness T2 of the intermediate layer satisfies 0 < T2 ≤ 0.5 mm.

**8.** The additively-manufactured object according to claim 6 or 7,
wherein the cladding layer having a thickness of 3 mm or more and 5 mm or less per layer is deposited over a plurality of layers.

*FIG. 1*

## FIG. 2

FIG. 3

# FIG. 4

FIG. 5

## FIG. 6

VICKERS HARDNESS [Hv/300gf]

DISTANCE FROM SURFACE LAYER [mm]

Legend:
◆ : TEST EXAMPLE 1-2    ▼ : TEST EXAMPLE 1-3
▲ : TEST EXAMPLE 1-5    ▶ : TEST EXAMPLE 2
◀ : TEST EXAMPLE 3    ⤙ : TEST EXAMPLE 4
✳ : TEST EXAMPLE 5    ● : TEST EXAMPLE 6
✦ : TEST EXAMPLE 7    ✕ : TEST EXAMPLE 8
＋ : TEST EXAMPLE 9    ✶ : TEST EXAMPLE 10
— : TEST EXAMPLE 11

EP 4 104 954 A1

FIG. 7

FIG. 8

## INTERNATIONAL SEARCH REPORT

| International application No. |
|---|
| PCT/JP2021/006012 |

**A. CLASSIFICATION OF SUBJECT MATTER**
Int.Cl. B22F7/08(2006.01)i, C22C32/00(2006.01)i, C22C1/05(2006.01)i,
B23K26/21(2014.01)i, B23K26/34(2014.01)i, B23K26/342(2014.01)i,
B23K35/30(2006.01)i, B33Y10/00(2015.01)i, B33Y80/00(2015.01)i,
B22F3/105(2006.01)i, B22F3/16(2006.01)i
FI: B23K26/342, B33Y80/00, B22F7/08A, B23K35/30340M, B22F3/105, C22C32/00P,
C22C1/05D, B23K26/21Z, B23K26/21N, B33Y10/00, B22F3/16, B23K26/34
According to International Patent Classification (IPC) or to both national classification and IPC

**B. FIELDS SEARCHED**

Minimum documentation searched (classification system followed by classification symbols)
Int.Cl. B23K26/00-26/70, B22F1/00-8/00, C22C1/04-1/05, 33/02,
B29C64/00-64/40, 67/00-67/08, 67/24-69/02, 3/00-73/34, B29D1/00-29/10,
33/00-99/00, B33Y10/00-99/00, B28B1/00-1/54, C22C29/06, B23K35/30

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-114716 A (FUJIMI INCORPORATED) 29 June 2017 (2017-06-29), paragraphs [0017]-[0096], fig. 1-4 | 1-8 |
| A | WO 2007/114524 A1 (KOMATSU LTD.) 11 October 2007 (2007-10-11), specification, page 7, line 34 to page 22, line 36, fig. 1-28 | 1-8 |

☐ Further documents are listed in the continuation of Box C.       ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 April 2021 | 11 May 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| International application No. |
| --- |
| PCT/JP2021/006012 |

| | | |
| --- | --- | --- |
| JP 2017-114716 A | 29 June 2017 | US 2019/0001556 A1<br>paragraphs [0024]-[0155], fig. 1-4<br>WO 2017/110828 A1<br>EP 3395781 A1 |
| WO 2007/114524 A1 | 11 October 2007 | US 2009/0019783 A1<br>paragraphs [0095]-[0218], fig. 1-28<br>CA 2644915 A1 |

Form PCT/ISA/210 (patent family annex) (January 2015)

**EP 4 104 954 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017114716 A

- JP 2020043355 A

**Non-patent literature cited in the description**

- Wear resistance in the soil of Stellite-6/WC coatings produced using laser cladding method. *Int. Journal of Refractory Metals and Hard Materials,* 2017, vol. 64, 20-26